# EUROPEAN PATENT APPLICATION

(11) **EP 4 723 495 A1**
(43) Date of publication of application: **08.04.2026**
(21) Application number: 24204743.9
(22) Date of filing: 04.10.2024
(51) Int. Cl.: H04B 5/00, H04W 4/80, H04W 52/02

(54) **NEAR FIELD COMMUNICATION DEVICE AND OPERATING METHOD**

(71) Applicant: NXP B.V., 5656 AG Eindhoven (NL)
(72) Inventor: Feichtinger, Mark, 5656 AG Eindhoven (NL); Mühlmann Andreas, Ulrich, 5656 AG Eindhoven (NL); Wobak, Markus, 5656 AG Eindhoven (NL)
(74) Representative: Krott, Michel

(57) **Abstract**

In accordance with a first aspect of the present disclosure, a near field communication (NFC) device is provided, comprising: a wake-up unit configured to: transmit one or more radio frequency, RF, pulses; detect a loading condition change occurring in response to transmitting said RF pulses; wake up one or more functional components of the NFC device if said loading condition change exceeds a predefined wake-up threshold; and a calibration state determination unit configured to determine a calibration state of the wake-up unit by detecting whether the loading condition change is within a predefined range below the wake-up threshold. In accordance with a second aspect of the present disclosure, a corresponding method of operating an NFC device is conceived.

## Description

### TECHNICAL FIELD

The present disclosure relates to a near field communication device. Furthermore, the present disclosure relates to a corresponding method of operating a near field communication device.

### BACKGROUND

The use of wireless energy harvesting based on radio frequency (RF) technology is becoming more widely used to power electronic devices and to charge batteries. In particular, wireless charging using near field communication (NFC) is a deployed technology for small accessory charging. Small accessories include, for example, wearables, human interface devices, and audio devices. Implementations can follow the NFC Forum Wireless Charging (WLC) specification, or a proprietary system based on legacy NFC communication schemes.

A system for wireless charging typically consists of a primary device, typically referred to as a "WLC poller" (WLC-P), magnetically coupled to a secondary device, typically referred to as a "WLC listener" (WLC-L). The secondary device is powered by a battery which can be recharged by the primary device using RF coupling, in particular NFC coupling. Note that the primary device may also be battery powered. Furthermore, the primary device (e.g., a reader) may use a technique called low power card detection (LPCD) to perform a presence check to poll for counterpart devices. LPCD uses short RF "pings" (i.e., RF pulses) to sense small load changes to detect approaching counterpart devices, such as tags or smart cards.

### SUMMARY

In accordance with a first aspect of the present disclosure, a near field communication (NFC) device is provided, comprising: a wake-up unit configured to: transmit one or more radio frequency, RF, pulses; detect a loading condition change occurring in response to transmitting said RF pulses; wake up one or more functional components of the NFC device if said loading condition change exceeds a predefined wake-up threshold; and a calibration state determination unit configured to determine a calibration state of the wake-up unit by detecting whether the loading condition change is within a predefined range below the wake-up threshold.

In one or more embodiments, the calibration state determination unit is further configured to: increment a counter indicative of a number of times that the loading condition change is within said predefined range; determine that the calibration of the wake-up unit is outdated if said counter exceeds a predefined counter threshold.

In one or more embodiments, the calibration state determination unit is configured to reset the counter if the wake-up unit has woken up said functional components and communication has been established with an external communication counterpart.

In one or more embodiments, the calibration state determination unit is configured to subtract a configurable number from the counter if the wake-up unit has woken up said functional components and no communication has been established with an external communication counterpart after a predefined amount of time.

In one or more embodiments, the calibration state determination unit is further configured to initiate a recalibration of the wake-up unit if it has determined that the calibration of the wake-up unit is outdated.

In one or more embodiments, the calibration state determination unit is configured to reset the counter upon or after initiating the recalibration of the wake-up unit.

In one or more embodiments, the calibration state determination unit is configured to detect that the loading condition change is within said predefined range if the loading condition change is greater than a low threshold and smaller than a high threshold, said low threshold and high threshold being smaller than the wake-up threshold.

In one or more embodiments, the loading condition change comprises a change of the magnitude of an output signal of an analog-to-digital converter (ADC) comprised in the NFC device.

In one or more embodiments, the NFC device is implemented as a wireless charging poller (WLC-P).

In accordance with a second aspect of the present disclosure, a method of operating a near field communication (NFC) device is conceived, comprising: transmitting, by a wake-up unit included in the NFC device, one or more radio frequency, RF, pulses; detecting, by said wake-up unit, a loading condition change occurring in response to transmitting said RF pulses; waking up, by said wake-up unit, one or more functional components of the NFC device if said loading condition change exceeds a predefined wake-up threshold; determining, by a calibration state determination unit included in the NFC device, a calibration state of the wake-up unit by detecting whether the loading condition change is within a predefined range below the wake-up threshold.

In one or more embodiments, the method further comprises: incrementing, by the calibration state determination unit, a counter indicative of a number of times that the loading condition change is within said predefined range; determining, by the calibration state determination unit, that the calibration of the wake-up unit is outdated if said counter exceeds a predefined counter threshold.

In one or more embodiments, the calibration state determination unit resets the counter if the wake-up unit has woken up said functional components and communication has been established with an external communication counterpart.

In one or more embodiments, the calibration state determination unit subtracts a configurable number from the counter if the wake-up unit has woken up said functional components and no communication has been established with an external communication counterpart after a predefined amount of time.

In one or more embodiments, the calibration state determination unit initiates a recalibration of the wake-up unit if it has determined that the calibration of the wake-up unit is outdated.

In one or more embodiments, the calibration state determination unit resets the counter upon or after initiating the recalibration of the wake-up unit.

### DESCRIPTION OF DRAWINGS

Embodiments will be described in more detail with reference to the appended drawings.
Fig. 1A shows an example of a wireless charging system.
Fig. 1B shows a graph displaying a WLC-P current consumption versus time.
Fig. 2A shows measurements of an analog-to-digital converter (ADC) output for deriving a detection metric.
Fig. 2B shows a graph displaying the detection metric and WLC-L distance to WLC-P versus time.
Fig. 3A shows an illustrative embodiment of an NFC device.
Fig. 3B shows an illustrative embodiment of a method of operating an NFC device.
Fig. 4 shows an outdated calibration state derived from a detection metric.
Fig. 5 shows a flow diagram of a calibration state monitoring process.
Fig. 6 shows a graph displaying the detection metric, WLC-L distance to WLC-P, and detection region counter versus time.

### DESCRIPTION OF EMBODIMENTS

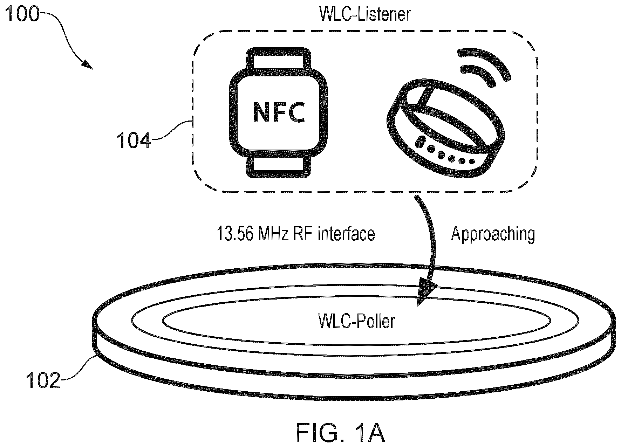

Fig. 1A shows an example of a wireless charging system. In NFC systems, a proximity coupling device (PCD), i.e. a reader or wireless charging device, may be magnetically coupled with a proximity integrated circuit card (PICC), i.e. a tag or energy receiving device. The PCD and the PICC exchange information by modulating a radio frequency (RF) carrier signal emitted by the PCD. The NFC wireless charging (WLC) standard issued by NFC Forum extends the pure communication purpose of NFC to wireless charging. In this case, a WLC-P may use an NFC communication link to charge small a NFC-enabled device, called a WLC-L. Hence, the NFC specification is used for controlling the wireless power charging using the same antenna and communication chain. Fig. 1A shows a typical NFC system comprising a WLC-P 102 and a WLC-L 104; the latter may for example be implemented as a smart watch or an NFC-enabled ring.

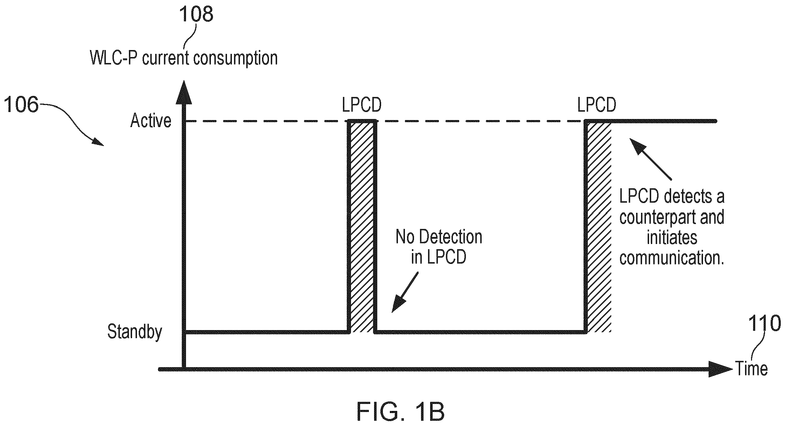

Fig. 1B shows a graph 106 displaying a WLC-P current consumption 108 of the wake-up, versus time 110. To save energy, the WLC-P enters a low power mode (e.g. "Standby") when it is idling. At configurable time instances (e.g., 1-10 Hz) the WLC-P may become "Active" to emit a short RF pulse to detect objects in its proximity. Nearby NFC devices may detune the WLC-P's antenna and matching network, which can be observed by the WLC-P's RF modem. Such a loading condition change - or "loading change" in short - may be detected and compared to a reference condition. This process is called low power card detection (LPCD). If LPCD detects a counterpart, the WLC-P attempts to initiate communication with the possible WLC-L using active polling for NFC communication at a frequency of 13.56 MHz. A typical LPCD RF pulse is in the order of 10's to 100's of microseconds, but active polling is in the 10's of milliseconds. As LPCD is a much shorter process than the initialization of communication, the WLC-P device stays longer in the standby mode and the resulting average current consumption is lowered compared to continuous polling for counterparts. Fig. 1B illustrates this process.

NFC communication devices typically use I/Q modulator and demodulator concepts for data transmission. A typical receiver (RX) chain comprises of a sampling 13.56 MHz mixer, a DC offset correction circuit, a baseband amplifier and an analog-to-digital converter (ADC) stage. As a result, after demodulation of the RF signal, the signal at the ADC is a DC-like signal, as no passive load modulation is performed by the WLC-L and only the load changes on the RF field are observed.

A typical WLC LPCD sequence works in two phases. The first phase is a calibration phase, during which RF pulses are emitted in a known unloaded environment. Hence, there is no counterpart in the vicinity. By adjusting the DC offset (DCO) correction, the ADC output is trimmed until it is equal to a specified calibration target, which is typically defined in the middle of the ADC's full scale range (FSR). The resulting DCO correction control values are saved and loaded during polling. The second phase is the polling phase, during which the WLC-P emits short RF pulses at configurable time instances or triggered by external events. A counterpart in the vicinity detunes the antenna and impacts the magnetic resonant tank (RLC network, antenna). Hence, the amplitude and the phase of the RX chain input changes. As the DCO control values are fixed, the ADC output changes and diverges from the calibration target. If the distance of the ADC output relative to the calibration target exceeds a predefined threshold, the device wakes up to initiate communication. This threshold may be referred to as the counterpart present threshold. The counterpart present threshold is defined in such a way that the WLC-P wakes up at the desired distance between the WLC-P and a WLC-L (e.g., typically 1 to 10 mm between the WLC-P and the WLC-L).

In NFC-based WLC applications, the calibration process is typically performed one time in the factory and the DCO correction values are saved in a non-volatile memory. This calibration process is performed for each device before it is shipped. A single calibration in the factory is sufficient as high load changes are observed. It is noted that other NFC applications requiring a very high LPCD detection sensitivity (e.g., detection of the distance of counterparts) may use a LPCD runtime calibration which is performed every time when a LPCD sequence is started. However, a drawback of a runtime calibration is that only relative loading changes can be detected. Hence, a polling device cannot detect whether the current loading state is "unloaded" (e.g. no proximity device present) or whether a counterpart is present that is favorable for WLC applications. For example, the polling device may not be able to detect that a fully charged accessory is kept on the charger.

Additionally, the calibration target is defined so that the whole dynamic range of the ADCs is used. However, due to several scenarios in the field, the calibration may become outdated, which means that the observed ADC reading drifts relative to the calibrated reading for the same loading condition. Example scenarios are changes in the RX chain parameters (e.g., BBA gain, DC offset, RLC components of the antenna matching) due to ageing or extreme temperature changes, and mechanical changes of the antenna or accessories covering the antenna (e.g. covers or shields for handheld devices).

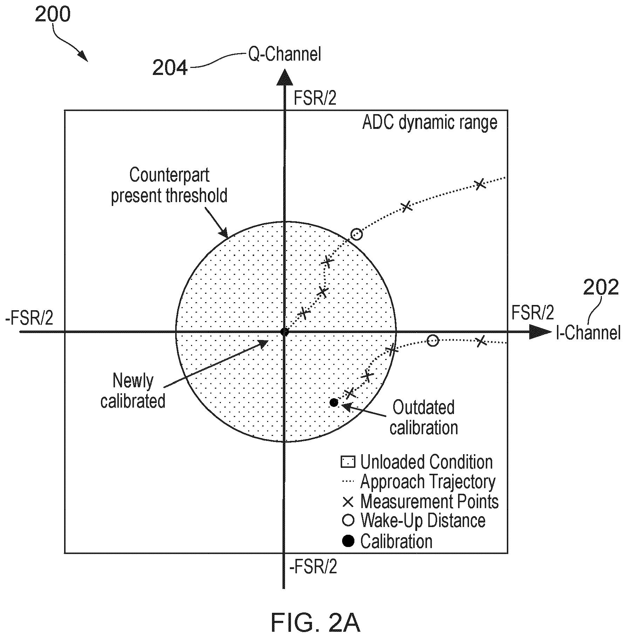

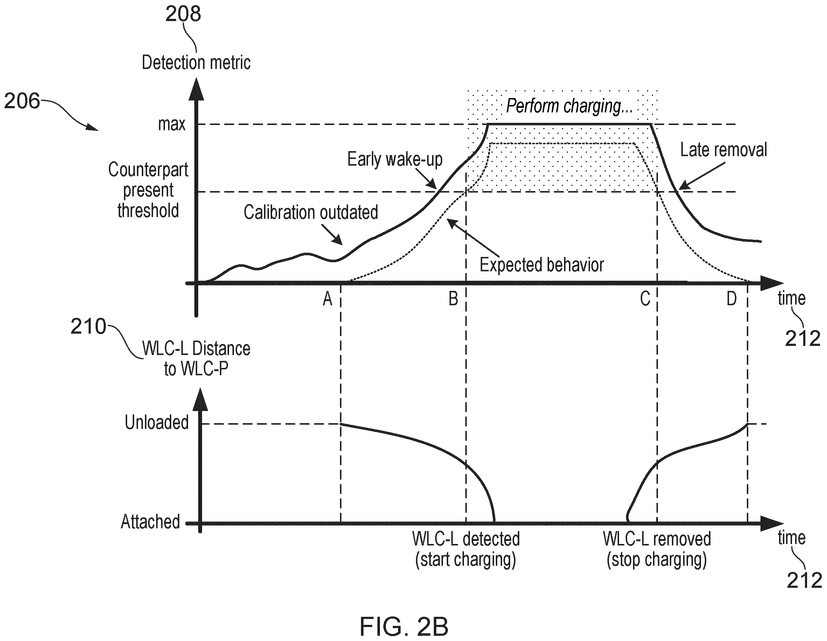

**Figs. 2A** **and** **2B** show measurements 200 of an analog-to-digital converter (ADC) output for deriving a detection metric, and a graph 206 displaying the detection metric 208 and WLC-L distance to WLC-P 210 versus time 212, respectively. In particular, Figs. 2A and 2B illustrate how an outdated calibration can impact the desired wake-up distance when applying the LPCD technique. In the shown example, the device wakes up at a larger distance between WLC-P and WLC-L as desired. This early wake-up may result in unnecessary, false wake-ups and to an undesired increased average power consumption. The calibration target in Fig. 2A is set to 0 LSB for both the I-channel 202 and the Q-channel 204 for the sake of simplicity, but the skilled person will appreciate that this calibration target may be chosen arbitrarily. Furthermore, the detection metric 208 is in this example the ADC magnitude. However, the skilled person will appreciate that other suitable detection metrics are possible, such as (among others) the ADC-I and ADC-Q, i.e., the outputs of the ADC in the I-channel 202 and in the Q-channel 204. The selection of a suitable detection metric typically depends on the specific use case.

Fig. 2B shows the impact of an outdated LPCD calibration on the wake-up performance. First, the calibration is up to date and the wake-up works as expected. However, after some time (A), the calibration has become outdated. Consequently, the approaching WLC-L leads to an early wake-up (shortly before B). In contrast, it is also possible that the outdated calibration leads to a very late wake-up. A wake-up which is too early would result in a higher power consumption, and thus in a reduced battery life of the end user device. When the wake-up is too late, or when no wake-up is performed at all, an accessory of the end user device is not charged, which leads to end user dissatisfaction. In a worst case the outdated calibration may even lead to missed wake-ups, depending on the detection metrics which are used. To mitigate the impact of an outdated calibration on the LPCD performance, it is possible to refrain from using the full dynamic range of the ADC and to use weaker wake-up thresholds, so that the possible counterpart is also detected in extreme temperature conditions and also after a long runtime at the desired detection distance.

Now discussed are an NFC device and a corresponding method of operating an NFC device, which facilitate detecting an outdated calibration state of a wake-up unit of the NFC device. This, in turn, facilitates initiating a recalibration in the field when appropriate, and thereby mitigating the impact of an outdated calibration on the performance of the wake-up unit, while still enabling the use of the full dynamic range of the ADC for an accurate wake-up threshold definition. As a result, the end user experience may be improved by a more reliable communication counterpart detection and an increased battery life time due to a lower current consumption. Advantageously, the NFC device may be implemented as a wireless charging poller (WLC-P).

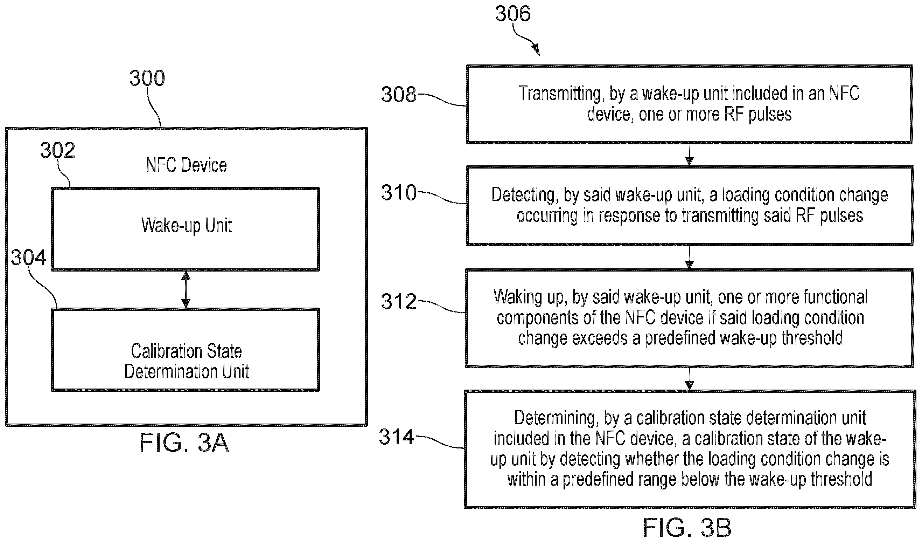

**Fig. 3A** shows an illustrative embodiment of an NFC device 300. The NFC device 300 comprises an wake-up unit 302 and a calibration state determination unit 304 which are operatively coupled to each other. The wake-up unit 302 is configured to transmit one or more RF pulses, to detect a loading condition change occurring in response to transmitting said RF pulses, and to wake up one or more functional components of the NFC device 300 if said loading condition change exceeds a predefined wake-up threshold. It is noted that the term functional components may refer to any component of the NFC device 300 other than the wake-up unit 302 and calibration state determination unit 304, which performs functions that are typically performed by an NFC device (e.g., executing contactless payment, fare transactions or wireless charging). Furthermore, the calibration state determination unit 304 is configured to determine a calibration state of the wake-up unit 302 by detecting whether the loading condition change is within a predefined range below the wake-up threshold. In this way, an outdated calibration state of the wake-up unit 302 may easily be determined, such that a recalibration of the wake-up unit 302 may be initiated when the NFC device 300 is being used in the field. It is noted that, while the wake-up unit 302 and calibration state determination unit are shown as separate units, they may also be integrated into a single physical unit. Furthermore, the wake-up unit 302 may be a unit that is specifically configured to carry out an LPCD process.

In one or more embodiments, the calibration state determination unit is further configured to increment a counter indicative of a number of times that the loading condition change is within said predefined range, and to determine that the calibration of the wake-up unit is outdated if said counter exceeds a predefined counter threshold. In this way, it may easily be determined that the calibration of the wake-up unit is outdated. More specifically, the outdated calibration of the wake-up unit represents a specific calibration state of the wake-up unit, and the use of the aforementioned counter facilitates determining that wake-up unit is in this state.

In one or more embodiments, the calibration state determination unit is configured to reset the counter if the wake-up unit has woken up said functional components and communication has been established with an external communication counterpart. In this way, it may easily be ensured that the determination of the calibration state, specifically of the calibration of the wake-up unit being outdated or not, starts anew after a correct wake-up event (i.e., after a "true" wake-up event). Furthermore, in one or more embodiments, the calibration state determination unit is configured to subtract a configurable number from the counter if the wake-up unit has woken up said functional components and no communication has been established with an external communication counterpart after a predefined amount of time. This may result in an additional degree of freedom. In particular, in case the communication was initiated, but not successful, then this means that the antenna is detuned to such an extent that the wake-up threshold was violated. However, there is no certainty on whether this detuning was caused by an outdated calibration, by an actual counterpart or, for example, by a metal plate. Thus, if a configurable number can be subtracted from the recalibration counter, unnecessary recalibrations may be avoided.

In one or more embodiments, the calibration state determination unit is further configured to initiate a recalibration of the wake-up unit if it has determined that the calibration of the wake-up unit is outdated. In this way, an online recalibration of the wake-up unit may be facilitated. It is noted that the term "online" refers to a recalibration which is performed while the NFC device is being used by a person, in contrast to an "offline" recalibration which is performed in a factory (i.e., before the NFC device is sold). In one or more embodiments, the calibration state determination unit is configured to reset the counter upon or after initiating the recalibration of the wake-up unit. In this way, it may easily be ensured that the determination of the calibration state, specifically of the calibration of the wake-up unit being outdated or not, starts anew after a recalibration of the wake-up unit.

In one or more embodiments, the calibration state determination unit is configured to detect that the loading condition change is within said predefined range if the loading condition change is greater than a low threshold and smaller than a high threshold, said low threshold and high threshold being smaller than the wake-up threshold. This results in a practical implementation, according to which it may easily be detected that the loading condition change is within the aforementioned predefined range. Furthermore, in one or more embodiments, the loading condition change comprises a change of the magnitude of an output signal of an analog-to-digital converter (ADC) comprised in the NFC device. The ADC magnitude is a suitable detection metric for determining whether the calibration of the wake-up unit is outdated. However, the skilled person will appreciate that other detection metrics may also be used, such as the magnitude of the ADC-I readout and/or the magnitude of the ADC-Q readout.

Fig. 3B shows an illustrative embodiment of a method 306 of operating an NFC device. The method 306 comprises the following steps. At 308, a wake-up unit included in the NFC device transmits one or more RF pulses. At 310, the wake-up unit detects a loading condition change occurring in response to transmitting said RF pulses. Furthermore, at 314, a calibration state determination unit included in the NFC device determines a calibration state of the wake-up unit by detecting whether the loading condition change is within a predefined range below the wake-up threshold. As described with reference to the corresponding NFC device shown in Fig. 3A, the method 306 facilitates determining an outdated calibration state of the wake-up unit, such that a recalibration of the wake-up unit may be initiated when the NFC device is being used in the field.

Typically, an NFC device enters a low power mode when no suitable counterpart is in its vicinity. However, the NFC-enabled device regularly emits RF pulses to detect RF field load changes and antenna detuning. This process may be referred to as tag detection or low power card detection (LPCD) and is used by NFC-based wireless charging devices. Once the LPCD process performed by a wake-up unit detects a counterpart in the vicinity of the NFC device, it will initiate communication with the counterpart. Initiating communication with the counterpart is a much longer process than LPCD and thus has a significantly increased power demand. If the LPCD calibration is outdated relative to its original "unloaded" condition target it degrades the LPCD performance. This means that false wake-ups may occur causing an overall power consumption increase. In other cases, the counterpart detection volume is reduced due to the degraded detection sensitivity. Typically, the WLC LPCD calibration is done once in factory for each single device. This is feasible as large RF load changes are observed in WLC.

In accordance with the present disclosure, an outdated LPCD calibration state may easily be detected in the field, such that an online recalibration may be initiated, to track an "unloaded" condition. Performing the LPCD calibration in the field may cancel temperature dependency and aging effects on the LPCD performance. Hence, the presently disclosed NFC device may enable using the full ADC dynamic range for an accurate wake-up threshold definition. As a result, the end user experience may be improved by a more reliable counterpart detection and an increased battery life time due to a lower current consumption.

More specifically, at least one LPCD detection metric may be monitored, in order to detect slow changes or drifts, for example caused by device aging, extreme temperature or mechanical stress, relative to a LPCD calibration in unloaded condition. Once an outdated LPCD calibration is detected, an online recalibration for LPCD may be triggered to track the "unloaded" condition. As a result, a degraded detection performance or false alarm probability causing increased power consumption or user dissatisfaction are minimized. The monitoring may include defining a configurable LPCD metric monitoring region associated to a slow drift of an "unloaded region", which is smaller than the counterpart detection threshold, applying a counter for LPCD metric results within the defined monitored region, and triggering an LPCD recalibration if the LPCD metric is within the monitored region for a configurable amount of observations.

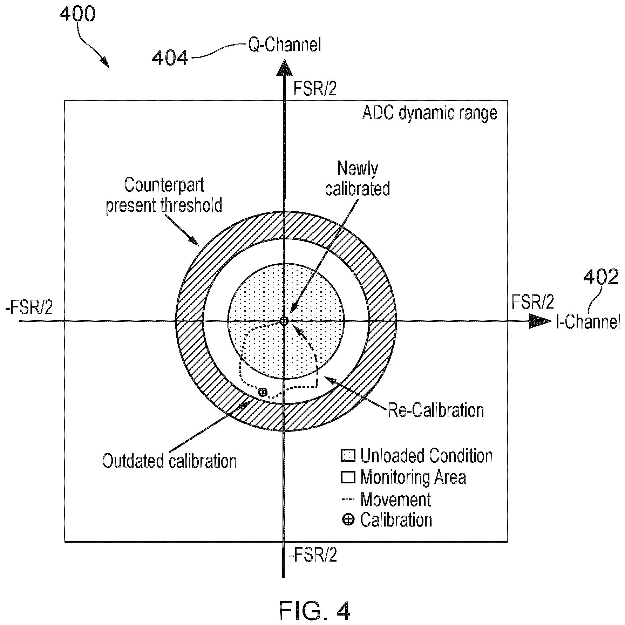

Fig. 4 shows an outdated calibration state 400 derived from a detection metric. To detect an outdated calibration, two additional thresholds may be defined in accordance with the present disclosure (i.e., two thresholds in addition to the wake-up threshold). These two additional thresholds define the monitored detection area (i.e., detection region). In this example, the LPCD detection metric is the ADC magnitude, e.g., sqrt(ADC-I² + ADC-Q²). Hence, the detection metric can be visualized as a circle on a Cartesian plane. However, the skilled person will appreciate that a different detection region could also be formed. In an unloaded condition and with an outdated calibration, the ADC output drifts away from the original target. It is noted that in this example a target value of ADC-I=ADC-Q=0 is assumed in order to simplify the visualization. However, a different target value might be chosen, depending on the application design. In accordance with the present disclosure, a counter may be incremented if the result is within the predefined monitored region between the calibration target and the wake-up threshold.

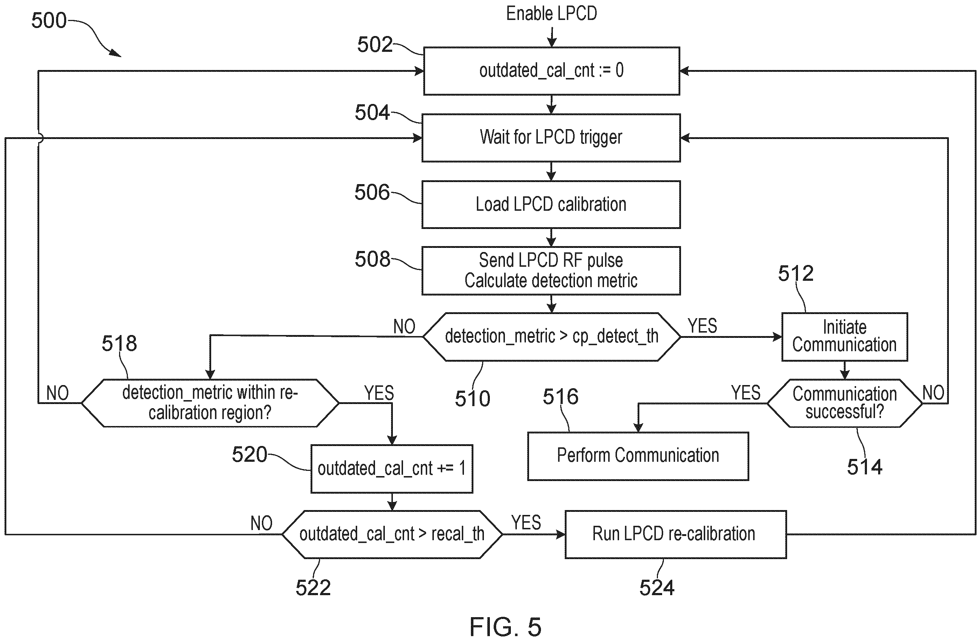

**Fig. 5** shows a flow diagram of a calibration state monitoring process 500. In particular, Fig. 5 shows a flow chart illustrating how an outdated calibration may be detected. After performing an LPCD RF pulse transmission and measurement, the WLC-P may calculate the LPCD detection metric. If the detection metric is above a configurable counterpart present threshold (i.e., the above-mentioned wake-up threshold), then communication with the WLC-L may be initialized. In case communication was established, the counter (*outdated_cal_cnt*) may be reset as a loaded condition was detected. If no communication was possible, the LPCD polling may be continued. However, this was a false wake-up event. In case of a false wake-up event a configurable number may be subtracted from *outdated_cal_cnt* (not shown). As explained above, this may result in an additional degree of freedom.

In case the LPCD metric is below the configurable counterpart present threshold, it may be checked if the LPCD detection metric is within the defined monitored detection region and, if so, the counter *outdated cal_cnt* may be increased. If this counter exceeds a definable threshold (*cp detect th*), a recalibration may be initiated, and the counter *outdated_cal_cnt* may be reset to zero. An advantage is that the measurement results are available anyway, so that only the counter *outdated_cal_cnt* for the additional region should be added. Furthermore, since the monitored detection region can easily be configured, the approach is flexible and it can easily be optimized for specific use cases.

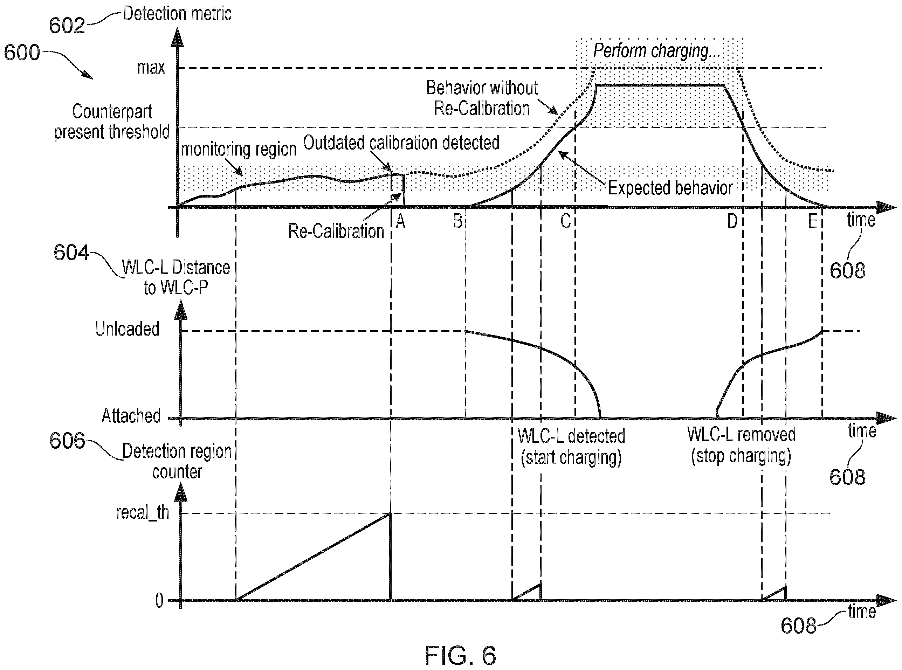

Fig. 6 shows a graph 600 displaying the detection metric 602, WLC-L distance to WLC-P 604, and detection region counter 606 versus time 608. By detecting an outdated calibration, a consistent LPCD performance may be ensured, because the distance between an "unloaded" condition and counterpart presence detection threshold may be recovered to its original state. Fig. 6 shows how the LPCD recalibration brings the ADC output back to the calibration target (A). The monitoring region for monitoring the detection metric 602 is shown below the wake-up threshold (i.e., the counterpart present threshold). Once the LPCD metric enters the monitoring region the counter *outdated_cal_cnt* may be increased until it exceeds the recalibration threshold *recal_th.* Once the WLC-L approaches the WLC-P (B), the wake-up threshold is exceeded at the expected distance between WLC-P and WLC-L (C).

It is noted that the embodiments above have been described with reference to different subject-matters. In particular, some embodiments may have been described with reference to method-type claims whereas other embodiments may have been described with reference to apparatus-type claims. However, a person skilled in the art will gather from the above that, unless otherwise indicated, in addition to any combination of features belonging to one type of subject-matter also any combination of features relating to different subject-matters, in particular a combination of features of the method-type claims and features of the apparatus-type claims, is considered to be disclosed with this document.

Furthermore, it is noted that the drawings are schematic. In different drawings, similar or identical elements are provided with the same reference signs. Furthermore, it is noted that in an effort to provide a concise description of the illustrative embodiments, implementation details which fall into the customary practice of the skilled person may not have been described. It should be appreciated that in the development of any such implementation, as in any engineering or design project, numerous implementation-specific decisions must be made in order to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill.

Finally, it is noted that the skilled person will be able to design many alternative embodiments without departing from the scope of the appended claims. In the claims, any reference sign placed between parentheses shall not be construed as limiting the claim. The word "comprise(s)" or "comprising" does not exclude the presence of elements or steps other than those listed in a claim. The word "a" or "an" preceding an element does not exclude the presence of a plurality of such elements. Measures recited in the claims may be implemented by means of hardware comprising several distinct elements and/or by means of a suitably programmed processor. In a device claim enumerating several means, several of these means may be embodied by one and the same item of hardware. The mere fact that certain measures are recited in mutually different dependent claims does not indicate that a combination of these measures cannot be used to advantage.

### LIST OF REFERENCE NUMBERS

- 100: wireless charging system
- 102: wireless charging poller (WLC-P)
- 104: wireless charging listener (WLC-L)
- 106: graph displaying WLC-P current consumption versus time
- 108: WLC-P current consumption
- 110: time
- 200: measurements of an analog-to-digital converter (ADC) output for deriving a detection metric
- 202: I-channel
- 204: Q-channel
- 206: graph displaying the detection metric and WLC-L distance to WLC-P versus time
- 208: detection metric
- 210: WLC-L distance to WLC-P
- 212: time
- 300: NFC device
- 302: wake-up unit
- 304: calibration state determination unit
- 306: method of operating an NFC device
- 308: transmitting, by a wake-up unit included in an NFC device, one or more RF pulses
- 310: detecting, by said wake-up unit, a loading condition change occurring in response to transmitting said RF pulses
- 312: waking up, by said wake-up unit, one or more functional components of the NFC device if said loading condition change exceeds a predefined wake-up threshold
- 314: determining, by a calibration state determination unit included in the NFC device, a calibration state of the wake-up unit by detecting whether the loading condition change is within a predefined range below the wake-up threshold
- 400: outdated calibration state derived from a detection metric
- 402: I-channel
- 404: Q-channel
- 500: flow diagram of a calibration state monitoring process
- 502: *outdated_cal_cnt:=* 0
- 504: wait for LPCD trigger
- 506: load LPCD calibration
- 508: send LPCD pulse and calculate detection metric
- 510: detection metric > *cp detect th*
- 512: initiate communication
- 514: communication successful?
- 516: perform communication
- 518: detection metric within recalibration region?
- 520: *outdated_cal_cnt* += 1
- 522: *outdated_cal_cnt > recal_th*
- 524: run LPCD recalibration
- 600: graph displaying the detection metric, WLC-L distance to WLC-P, and detection region counter versus time
- 602: detection metric
- 604: WLC-L distance to WLC-P
- 606: detection region counter
- 608: time

## Claims

1. A near field communication, NFC, device, comprising:
a wake-up unit configured to:
transmit one or more radio frequency, RF, pulses;
detect a loading condition change occurring in response to transmitting said RF pulses;
wake up one or more functional components of the NFC device if said loading condition change exceeds a predefined wake-up threshold; and
a calibration state determination unit configured to determine a calibration state of the wake-up unit by detecting whether the loading condition change is within a predefined range below the wake-up threshold.

2. The NFC device of claim 1, wherein the calibration state determination unit is further configured to:
increment a counter indicative of a number of times that the loading condition change is within said predefined range;
determine that the calibration of the wake-up unit is outdated if said counter exceeds a predefined counter threshold.

3. The NFC device of claim 2, wherein the calibration state determination unit is configured to reset the counter if the wake-up unit has woken up said functional components and communication has been established with an external communication counterpart.

4. The NFC device of claim 2 or 3, wherein the calibration state determination unit is configured to subtract a configurable number from the counter if the wake-up unit has woken up said functional components and no communication has been established with an external communication counterpart after a predefined amount of time.

5. The NFC device of any one of claims 2 to 4, wherein the calibration state determination unit is further configured to initiate a recalibration of the wake-up unit if it has determined that the calibration of the wake-up unit is outdated.

6. The NFC device of claim 5, wherein the calibration state determination unit is configured to reset the counter upon or after initiating the recalibration of the wake-up unit.

7. The NFC device of any preceding claim, wherein the calibration state determination unit is configured to detect that the loading condition change is within said predefined range if the loading condition change is greater than a low threshold and smaller than a high threshold, said low threshold and high threshold being smaller than the wake-up threshold.

8. The NFC device of any preceding claim, wherein the loading condition change comprises a change of the magnitude of an output signal of an analog-to-digital converter, ADC, comprised in the NFC device.

9. The NFC device of any preceding claim, being implemented as a wireless charging poller, WLC-P.

10. A method of operating a near field communication, NFC, device, comprising:
transmitting, by a wake-up unit included in the NFC device, one or more radio frequency, RF, pulses;
detecting, by said wake-up unit, a loading condition change occurring in response to transmitting said RF pulses;
waking up, by said wake-up unit, one or more functional components of the NFC device if said loading condition change exceeds a predefined wake-up threshold;
determining, by a calibration state determination unit included in the NFC device, a calibration state of the wake-up unit by detecting whether the loading condition change is within a predefined range below the wake-up threshold.

11. The method of claim 10, further comprising:
incrementing, by the calibration state determination unit, a counter indicative of a number of times that the loading condition change is within said predefined range;
determining, by the calibration state determination unit, that the calibration of the wake-up unit is outdated if said counter exceeds a predefined counter threshold.

12. The method of claim 11, wherein the calibration state determination unit resets the counter if the wake-up unit has woken up said functional components and communication has been established with an external communication counterpart.

13. The method of claim 11 or 12, wherein the calibration state determination unit subtracts a configurable number from the counter if the wake-up unit has woken up said functional components and no communication has been established with an external communication counterpart after a predefined amount of time.

14. The method of any one of claims 11 to 13, wherein the calibration state determination unit initiates a recalibration of the wake-up unit if it has determined that the calibration of the wake-up unit is outdated.

15. The method of claim 14, wherein the calibration state determination unit resets the counter upon or after initiating the recalibration of the wake-up unit.

## Amended claims

### Amended claims in accordance with Rule 137(2) EPC.

1. A near field communication, NFC, device (300), comprising:
a wake-up unit (302) configured to:
transmit one or more radio frequency, RF, pulses;
detect a loading condition change occurring in response to transmitting said RF pulses:
wake up one or more functional components of the NFC device (300) if said loading condition change exceeds a predefined wake-up threshold; and
a calibration state determination unit (304) configured to determine a calibration state of the wake-up unit (302) by detecting whether the loading condition change is within a predefined range below the wake-up threshold, wherein the calibration state determination unit (304) is further configured to:
increment a counter indicative of a number of times that the loading condition change is within said predefined range;
determine that the calibration of the wake-up unit (302) is outdated if said counter exceeds a predefined counter threshold.

2. The NFC device (300) of claim 1, wherein the calibration state determination unit (304) is configured to reset the counter if the wake-up unit (302) has woken up said functional components and communication has been established with an external communication counterpart.

3. The NFC device (300) of claim 1 or 2, wherein the calibration state determination unit (304) is configured to subtract a configurable number from the counter if the wake-up unit (302) has woken up said functional components and no communication has been established with an external communication counterpart after a predefined amount of time.

4. The NFC device (300) of any preceding claim, wherein the calibration state determination unit (304) is further configured to initiate a recalibration of the wake-up unit (302) if it has determined that the calibration of the wake-up unit (302) is outdated.

5. The NFC device (300) of claim 4, wherein the calibration state determination unit (304) is configured to reset the counter upon or after initiating the recalibration of the wake-up unit (302).

6. The NFC device (300) of any preceding claim, wherein the calibration state determination unit (304) is configured to detect that the loading condition change is within said predefined range if the loading condition change is greater than a low threshold and smaller than a high threshold, said low threshold and high threshold being smaller than the wake-up threshold.

7. The NFC device (300) of any preceding claim, wherein the loading condition change comprises a change of the magnitude of an output signal of an analog-to-digital converter, ADC, comprised in the NFC device (300).

8. The NFC device (300) of any preceding claim, being implemented as a wireless charging poller, WLC-P.

9. A method (306) of operating a near field communication, NFC, device, comprising:
transmitting (308), by a wake-up unit included in the NFC device, one or more radio frequency, RF, pulses;
detecting (310), by said wake-up unit, a loading condition change occurring in response to transmitting said RF pulses;
waking up (312), by said wake-up unit, one or more functional components of the NFC device if said loading condition change exceeds a predefined wake-up threshold:
determining (314), by a calibration state determination unit included in the NFC device, a calibration state of the wake-up unit by detecting whether the loading condition change is within a predefined range below the wake-up threshold;
incrementing, by the calibration state determination unit, a counter indicative of a number of times that the loading condition change is within said predefined range;
determining, by the calibration state determination unit, that the calibration of the wake-up unit is outdated if said counter exceeds a predefined counter threshold.

10. The method (306)of claim 9, wherein the calibration state determination unit resets the counter if the wake-up unit has woken up said functional components and communication has been established with an external communication counterpart.

11. The method (306) of claim 9 or 10, wherein the calibration state determination unit subtracts a configurable number from the counter if the wake-up unit has woken up said functional components and no communication has been established with an external communication counterpart after a predefined amount of time.

12. The method (306) of any one of claims 9 to 11, wherein the calibration state determination unit initiates a recalibration of the wake-up unit if it has determined that the calibration of the wake-up unit is outdated.

13. The method (306) of claim 12, wherein the calibration state determination unit resets the counter upon or after initiating the recalibration of the wake-up unit.
